# EUROPEAN PATENT APPLICATION

(11) **EP 2 975 347 A1**
(43) Date of publication of application: **20.01.2016**
(21) Application number: 14425095.8
(22) Date of filing: 14.07.2014
(51) Int. Cl.: F26B 5/14, F26B 13/00, F26B 13/28, B29C 37/00

(54) **System for drying an extrudate exiting a calibration tank**

(71) Applicant: Bocchiotti S.p.A. Societa' per l'Industria Elettrotecnica, I-20124 Milano (IT)
(72) Inventor: Calcagno, Marco, I-16016 Genova (IT); Canepa, Mauro, I-16157 Genova (IT); Ferla, Guido, I-16038 Genova (IT)
(74) Representative: Leihkauf, Steffen Falk

(57) **Abstract**

A drying module (4) for an extrudate forms at least one passage channel (6) for the continuous passage of the extrudate (2), said passage channel (6) having a longitudinal direction (7) parallel to a movement direction of the extrudate (2), and a cross-section shape approximately complementary to the cross-section shape of the extrudate (2),
wherein the drying module (4) further forms a blowing slit (8) connected to a drying gas source (9) and opening into the passage channel (6) with such an inclination to the longitudinal direction (7) as to direct the drying gas into the passage channel (6) towards an inlet side (16) of the drying module (4).

## Description

The present invention generally relates to the extrusion field, for example, the extrusion of thermoplastic material profiles, and particularly a system for drying an extrudate exiting a calibration tank.

The continuous extruded product exiting the extruder is subjected to a calibration and cooling step during which the extrudate passes through a calibration tank containing industrial water. Upon exiting the calibration tank, the already solidified extrudate has to be dried for the successive punching, marking, pulling, cutting, and transportation operations. In all the operations following the cooling and calibration, the extrudate has to be perfectly dry, in order to ensure not only properly performing the operation itself (for example, the proper adhesion and fixing of the ink of the marking machines), but also to avoid damages to the working stations due to the presence of water.

For this reason, it is known to provide the calibration tanks for continuous extrudates with a drying unit arranged at a drying opening that further performs a water retention function to avoid excessive water losses from the calibration tank through the outlet opening.

Usually, the drying unit comprises two drying modules:
an inner module, which is a part of a wall of the calibration tank and performs a coarse drying of the extrudate, in addition to hold water in the tank, and an outer module arranged downstream of the inner module for performing a complete drying of the extrudate.

To the state of the art, both the inner and outer modules form one or more channels for the passage of the extrudate, having a cross-section shape that is possibly complementary to the cross-section shape of the extrudate, as well as one or more suction slits opening into the passage channels. A vacuum is applied to the suction slits, to suction air and water from the extrudate surface during the passage thereof through the passage channel.

The vacuum is generated by vacuum pumps having a high energy consumption, with installed powers of about 2.5kW - 5kW, and which are subject to wear due to the impurities that are suctioned together with the water of the calibration tank. Therefore, the operation of the known drying systems is expensive and requires frequent maintenance interventions. Furthermore, the suctioned water and air mixture has to be divided again in bulky and noisy cyclone separators.

The suction drying draws into the inner module also the solid impurities from the calibration tank, and promotes a deposition thereof in the passage channel between the steel of the module and the extrudate surface, generating surface stripings in the extrudate and the passage channel, which decrease the extrudate quality and esthetics. Furthermore, the drying module wear is increased by the fact that the suctioning depression draws the extrudate surface against the steel of the passage channel.

In the example of calibration of an extrudate for thermoplastic electric cable ducts, the air and water suck noise is in the order of 86.5dB, and it is perceived as annoying.

Object of the present invention is to provide a system for drying an extrudate exiting a calibration tank, having such characteristics as to obviate at least some of the drawbacks described with reference to the prior art.

This and other objects are achieved by a drying system according to claim 1.

Advantageous embodiments are the object of the dependent claims.

In accordance with an aspect of the invention, a system for drying an extrudate exiting a calibration tank comprises a drying module connectable to the calibration tank and having:
- at least one passage channel for the continuous passage of the extrudate from the inside of the calibration tank to the outside of the calibration tank, said passage channel having a longitudinal direction parallel to a passage direction of the extrudate and a cross-section shape approximately complementary to the cross-section shape of the extrudate,
- at least one blowing slit connectable to a drying gas source, particularly pressurized air or pumped air, and opening into the passage channel with an inclination to the longitudinal direction such as to blow the drying gas into the passage channel towards the inside of the calibration tank.

The drying gas insufflated into the passage channel in counter-current with respect to the extrudate movement generates an overpressure in the passage channel opposing the hydrostatic pressure of the water in the calibration tank, thus reducing the water leakage through the passage channel (dam effect). The water of the calibration tank that tries leaking out through the interspace between the outer surface of the extrudate and the inner surface of the passage channel is pushed back into the calibration tank. In addition, by the Venturi effect, the drying gas insufflated through the blowing slit into the passage channel draws into the passage channel a further air flow from the outside of the tank and in counter-current with respect to the extrudate movement.

The combined effect of the insufflated drying gas and the further air flow drawn from the outside of the tank efficiently hinders the water leakage from the calibration tank and ensures a good drying degree of the extrudate.

In order to better understand the invention and appreciate the advantages thereof, some exemplary, nonlimiting embodiments will be described herein below with reference to the appended drawings, in which:

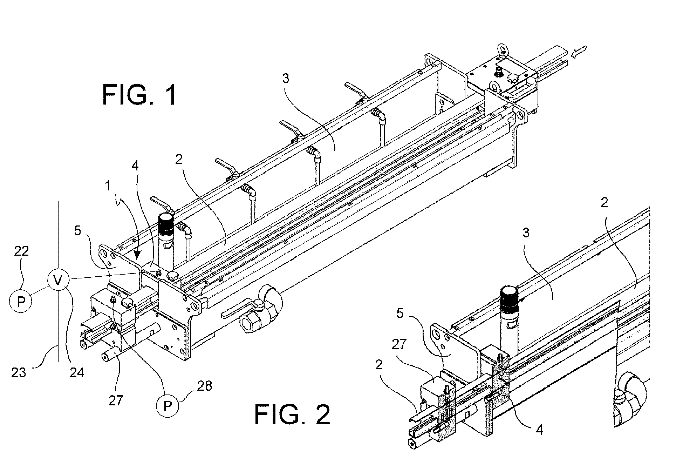

Fig. 1 is a perspective view of a calibration tank for an extruded product, provided with a drying system of the extrudate according to an embodiment,
Fig. 2 shows a detail of Fig. 1 in partial section,
Figs. 3 and 4 are perspective views of a drying module of the drying system according to the invention, in an open configuration,
Fig. 5 shows the drying module of Figs. 3 and 4 in a closed configuration,

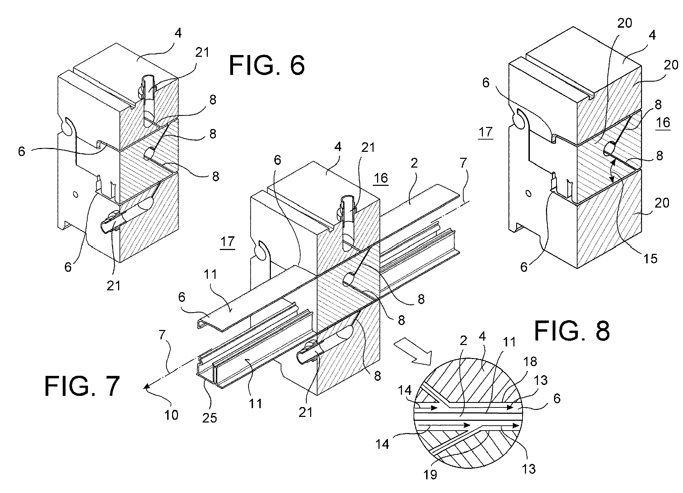

Fig. 6 shows the drying module of Fig. 5 in a longitudinal - vertical section,
Fig. 7 shows the drying module of Fig. 6 with two extrudates received in passage channels of the module,
Fig. 8 shows a drying module according to a further embodiment, in a longitudinal - vertical section.

With reference to the Figures, a system 1 for drying an extrudate 2 exiting a calibration tank 3 comprises a drying module 4 connectable to the calibration tank 3, for example, so as to be a part of a containment wall 5 thereof.

The drying module 4 forms at least one passage channel 6 for the continuous passage of the extrudate 2 from the inside of the calibration tank 3 to the outside of the calibration tank 3 (in other words, from an inlet side 16 of the module 4 to an outlet side 17 of the module 4). The passage channel 6 has a longitudinal direction 7 parallel to a passage or movement direction of the extrudate 2 and a cross-section shape approximately complementary to the cross-section shape of the extrudate 2.

The drying module 4 further forms at least one blowing slit 8 connectable to a drying gas source 22, 23, 24, particularly to a conduit for pressurized air or pumped air, and opening into the passage channel 6 with an inclination to the longitudinal direction 7 such as to direct the drying gas into the passage channel 6 towards the inside of the calibration tank 3.

The drying gas insufflated into the passage channel 6 in counter-current with respect to the movement direction 10 of the extrudate 2 generates an overpressure in the passage channel 6 opposing the water hydrostatic pressure in the calibration tank 3, thus reducing the water leakage through the passage channel 6 (dam effect). The water of the calibration tank 3 trying leaking out through the interspace between the outer surface 11 of the extrudate 2 and the inner surface 18, 19 of the passage channel 6 is pushed back in the calibration tank 3. In addition, by the Venturi effect, the flow 13 of the drying gas insufflated through the blowing slit 8 in the passage channel 6, draws into the passage channel 6 a further air flow 14 from the outside of the tank 3 and in counter-current with respect to the movement direction of the extrudate 2.

The combined effect of the insufflated drying gas (flow 13) and the further air flow 14 drawn from the outside of the tank 3 efficiently hinders the water leakage from the calibration tank 3 and ensures a good drying degree of the extrudate 2.

In accordance with an embodiment, the blowing slit 8 has a thickness ranging between 0.5mm ... 2mm, preferably between 0.5mm ... 1.5mm, still more preferably between 0.8mm ... 1.2mm, e.g. about 1.0mm.

This minimizes the drying gas, particularly pressurized air consumption, while ensuring the required pressure and speed of the drying gas flow 13.

The inclination angle 15 of the blowing slit 8 with respect to the longitudinal direction 7 of the passage channel 6 ranges between 5° ... 75°, preferably between 30° ... 60°, still more preferably between 40° ... 50°, e.g. 45°.

This optimizes the effect of drying the extrudate 2 and retaining water in the calibration tank 3.

In accordance with an embodiment, the blowing slit 8 is substantially planar. This facilitates the manufacture of the drying module 4 and promotes a good distribution of the insufflated air.

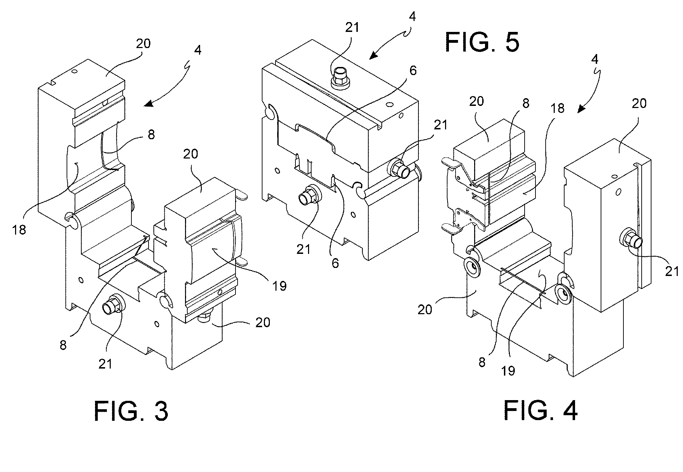

Preferably, the blowing slit 8 extends in an inclined plane with respect to the longitudinal direction 7 with the above-mentioned inclination angle 15, so as to insufflate an air blade into the passage channel in the direction of the inlet side 16 of the drying module 4. Consequently, as it can be seen for example in Figs. 3 and 5, an outlet line of the blowing slit 8 in the passage channel 6 lies in the same inclined plane with respect to the longitudinal direction 7.

In accordance with an embodiment, the passage channel 6 is in the shape of a thin slit having a thickness significantly less than the transversal extension and also the longitudinal extension, and being defined by two opposite or mutually facing surfaces 18, 19 obtained in a plurality of blocks 20 of the module 4 that can be moved away one from the other in an opening position of the drying module 4 (Figs. 3, 4), to receive and release an extrude section 2, and which can be brought near to one another in a closure position (Fig. 5) in which the passage channel 6 takes a shape approximately complementary to the shape of the extrude section 2.

The blocks 20 can be moved, for example, rotated or translated one to the other between said opening and closure positions. At least one of the blocks 20 forms the at least one blowing slit 8 and a connection opening 21 in flow communication with the blowing slit 8 and connectable to the source of drying gas, for example an air pump 22 or a pressurized air grid 23, preferably by the interposition of a valve 24 for adjusting the drying gas pressure.

The drying gas pressure, particularly the air pressure, applied to the blowing slit 8, is indicatively (when the drying module 4 is operating and with the extrudate 2 present in the passage channel 6) between 0.3bar and 1.5bar. However, it is preferred and more advantageous to keep the air pressure in the range between 0.5bar and 0.8bar. This pressure magnitude order and the air flow rate that is reduced due to the small sections of the blowing slit 8, and the reduced interspaces between the extrudate 2 and the surfaces 18, 19 of the passage channel 6 involve very reduced pressurized air consumptions, and negligible electric power consumptions compared to the prior art.

The drying module 4 may comprise one or more blowing slits 8 that can be formed in one or more of the blocks 20 and can open in only one or both the opposite surfaces 18, 19 of a single passage channel 6. Furthermore, the drying module 4 can define 2 or more passage channels 6, particularly to receive and dry single components of to-be-assembled extruded products, such as, for example the base 25 and the lid 26 of an electric cable duct.

Preferably, each block 20 provided with one or more of the blowing slits 8 has its own connection opening 21 for the pneumatic connection attachment.

The drying system 1 operates as follows. The extrudate 2 coming from the extruder passes through the calibration tank 3 and is inserted in the drying module 4, when the latter is in the open position. Subsequently, the drying module 4 is brought to the closed position and defines the passage channels 6 for the continuous passage of the extrudate from the inside of the calibration tank 3 to the outside thereof. By applying low-pressure pressurized air to the connection opening 21 of the drying module 4, the blowing slit(s) 8 create(s) one or more air blades directed into the passage channels 6 with such an inclination as to form, between the extrudate and the inner surface 18, 19 of the passage channel 6 a drying gas flow 13 directed towards the inlet side of the module 4, where it bubbles out in the calibration tank 3. By the Venturi effect, the drying gas flow 13 draws a further air flow 14 from the outlet side 17 into the passage channel 6.

In an advantageous embodiment, a further drying module 27 can be arranged downstream of the drying module 4, connected to a vacuum pump 28 so as to suction the residual moisture from the outer surface of the extrudate 2 (fine drying).

The drying system described above has a number of advantages.

By generating an over-pressure inside the drying module 4, the water leakage from the calibration tank 3 is hindered, thus improving the dam effect, while by the prior art systems (suctioning with vacuum pumps), water is inevitably withdrawn from the calibration tank. The solid impurities and floculations that are present in the suctioned water are the reason for damage to the pumps.

The pressurized air consumption of the drying system 1 is minimized, since a very low supplying pressure, of an order of 0.5 bar ... 0.8 bar, is sufficient to achieve a satisfactory drying. Furthermore, the air flow rate is very limited, since the flow section between the extrudate 2 and the passage channel 6 is very reduced. The same flow resistance, which in the prior art involves a high power consumption of the vacuum pumps, surprisingly keeps the drying system consumptions low, by means of the blown air blade according to the invention.

Furthermore, the drying by a blown air blade generates a turbulent water/air motion on the extrudate 2 surfaces, which increases the thermal exchange, hence reducing the cooling times of the extrudate 2, allowing the calibration/cooling tanks 3 to be manufactured with reduced dimensions.

The drying gas flow 13 in counter-current to the extrudate 2 movement removes the solid impurities that are present in the calibration tank, which otherwise would deposit between the extrudate 2 and the passage channel 6, thus generating surface stripings that decrease the extrudate quality and appearance.

The drying gas exiting the blowing slits 8 moves naturally and prevailingly in the spaces between the passage channel 6 and the extrudate 2 with a larger width, preventing the water leakage from the calibration tank 3 in the zones having a higher flow section.

The noise generated by the injection of pressurized air into the passage channels 6 (measured value of 84 dB) is less than the suck noise of the prior art drying modules (measured value of 86.5 dB).

Furthermore, the air pressure applied to the passage channels 6 creates an air cushioning between the steel of the drying module 4 and the extrudate 2, thus reducing the module 4 wear and friction.

It shall be apparent that, to the system 1, the module 4, and the method for drying an extrudate 2 exiting the calibration tank 3 according to the present invention, those of ordinary skill in the art, in order to meet contingent, specific needs, will be able to make further modifications and variations, all of which anyhow falling within the protection scope of the invention, as defined by the following claims.

## Claims

1. A system (1) for drying an extrudate (2) exiting a calibration tank (3), comprising a drying module (4) connectable to the calibration tank (3) and forming at least one passage channel (6) for the continuous passage of the extrudate (2) from an inlet side (16) of the drying module (4) intended to face the inside of the calibration tank (3) to an outlet side (17) of the drying module (4) intended to face the outside of the calibration tank (3), said passage channel (6) having a longitudinal direction (7) parallel to a movement direction of the extrudate (2) and a cross-section shape approximately complementary to the cross-section shape of the extrudate (2),
wherein the drying module (4) further forms at least one blowing slit (8) connectable to a drying gas source (22, 23, 24) and opening into the passage channel (6) with such an inclination to the longitudinal direction (7) as to direct the drying gas into the passage channel (6) towards the inlet side (16) of the drying module (4).

2. The system (1) according to claim 1, wherein the blowing slit (8) has a thickness ranging between 0.5mm ... 1.5mm, preferably ranging between 0.8mm ... 1.2mm, particularly of about 1.0mm.

3. The system (1) according to claim 1 or 2, wherein the blowing slit (8) is inclined with respect to the longitudinal direction (7) of the passage channel (6) with an inclination angle (15) ranging between 30° ... 60°, preferably ranging between 40° ... 50°, particularly about 45°.

4. The system (1) according to any of the preceding claims, wherein the blowing slit (8) extends in a plane which is inclined with respect to the longitudinal direction (7), so as to insufflate an air blade into the passage channel (6) in the direction of the inlet side (16) of the drying module (4).

5. The system (1) according to any of the preceding claims, wherein the passage channel (6) is in the shape of a slit having a thickness less than the transversal extension and the longitudinal extension and being defined by two facing surfaces (18, 19) that can be moved away from one another in an opening position of the drying module (4) to receive and release said extrudate (2), and which can be brought near to one another in a closure position in which the passage channel (6) takes a shape approximately complementary to the shape of the extrudate (2).

6. The system (1) according to claim 5, wherein the drying module (4) comprises a plurality of at least two blocks (20) forming the facing surfaces (18, 19) of the passage channel (6), wherein at least one of the blocks (20) forms the at least one blowing slit (8) and a connection opening (21) in flow communication with the blowing slit (8) and connectable to the source of drying gas.

7. The system (1) according to any of the preceding claims, comprising said drying gas source (22, 23, 24), wherein a pressure of drying gas applied to the blowing slit (8) ranges from 0.3bar to 1.5bar, preferably from 0.5bar to 0.8bar.

8. The system (1) according to claim 5, wherein at least one of said blowing slits (8) opens respectively in each one of the facing surfaces (18, 19) of the passage channel (6),

9. A method for drying an extrudate (2) exiting a calibration tank (3), comprising the steps of:
- connecting a drying module (4) to the calibration tank (3) ;
- forming in the drying module (4) at least one passage channel (6) for the passage of the extrudate (2) from the inside of the calibration tank (3) to the outside of the calibration tank (3), said passage channel (6) having a longitudinal direction (7) parallel to a movement direction of the extrudate (2) and a cross-section shape approximately complementary to the cross-section shape of the extrudate (2),
- forming in the drying module (4) at least one blowing slit (8) opening into the passage channel (6) with such an inclination to the longitudinal direction (7) as to be able to direct a drying gas into the passage channel (6) towards the inside of the calibration tank (3),
- passing the extrudate (2) from the inside of the calibration tank (3) through the passage channel (6) to the outside of the calibration tank (3),
- blowing, by the blowing slit (8), a drying gas blade into the passage channel (6), creating in the passage channel (6):
- a drying gas flow (13) which bubbles out into the calibration tank (3), and
- a further air flow (14) suctioned from the outside of the calibration tank (3) by Venturi effect, using the drying gas flow (13) as a motive fluid.

10. A method according to claim 9, comprising the step of applying to the blowing slit (8) pressurized air with a pressure ranging from 0.5bar to 0.8bar.
